# EUROPEAN PATENT SPECIFICATION

(11) **EP 0 514 528 B1**
(45) Date of publication and mention of the grant of the patent: **10.01.1996**
(21) Application number: 92901737.4
(22) Date of filing: 26.11.1991
(51) Int. Cl.: A23L 1/105

(54) **SOLUBLE DIETARY FIBER COMPOSITIONS AND METHOD OF PREPARATION**
LÖSLICHE DIÄTFASERNZUSAMMENSTELLUNGEN UND VERFAHREN ZUR HERSTELLUNG DERSELBEN
COMPOSITIONS DIETETIQUES SOLUBLES A BASE DE FIBRES ET PROCEDE DE PREPARATION

(30) Priority: 05.12.1990 US 622590
(43) Date of publication of application: 25.11.1992
(73) Proprietor: INGLETT, George E., Peoria, IL 61612-9575 (US)
(72) Inventor: INGLETT, George E., Peoria, IL 61612-9575 (US)
(74) Representative: Grünecker, Kinkeldey, Stockmair & Schwanhäusser Anwaltssozietät
(86) International application number: US9108909
(87) International publication number: WO9210106

(56) References cited:
- EP-A- 0 166 825
- EP-A- 0 231 729
- EP-A- 0 258 486
- US-A- 4 028 468
- US-A- 4 311 714
- US-A- 4 656 040
- US-A- 4 857 356
- US-A- 4 908 223
- US-A- 4 990 344
- US-A- 4 996 063
- US-A- 5 013 561
- US-A- 5 082 672
- DATABASE WPIL Section Ch, Week 9021, Derwent Publications Ltd., London, GB; Class B04, AN 90-159754(21)

## Description

### Field of the Invention

This invention relates to the conversion of milled cereal products to soluble dietary fiber compositions which are useful in a variety of foods as sources of soluble dietary fiber.

Dietary fiber is considered to be the soluble and insoluble components of food that are not digested by enzymes in the human gastrointestinal tract. The primary sources of dietary fiber include such cell wall materials as cellulose, hemicelluloses, lignin, and pectins, along with gums and mucilages. Dietary fiber has been considered an important food component since early times. Recently, Burkitt et al. [Lancet 2:1408-1411 (1972)] concluded that dietary fiber has a role in the prevention of certain large-intestine diseases, including cancer of the colon and diverticulitis. Diets containing large amounts of dietary fiber lead to stools that are softer and larger, and bowel movements are generally more frequent. Burkitt also mentioned that the serum cholesterol rises when dietary fiber is removed from the diet, and that eating a fiber-rich diet lowers serum cholesterol. Trowell [Am. J. Clin. Nutr. 25: 464-465 (1972)] reached a similar conclusion regarding the relationship between fiber and health benefits.

It is now known that not all dietary fiber is the same and that different fibers provide different health benefits. For example, wheat bran is very rich in insoluble dietary fiber (mainly cellulose and hemicelluloses) and is excellent for decreasing the transit time of food through the digestive tract [Anderson et al., Am. J. Clin. Nutr. 32:346-363 (1979)]. Some fibers are reported to reduce total plasma cholesterol [Munoz et al., Am. J. Clin. Nutr. 32:580-592 (1979)].

### Description of the Prior Art

In recent years, considerable attention has been given to oats as a source of dietary fiber. It is the soluble fiber component that is effective in lowering serum cholesterol levels. Oatmeal, or rolled oats, and especially oat bran are rich sources of this soluble fiber. The first indication of serum cholesterol lowering by rolled oats was observed in rats by Degroot et al. [Lancet 2:303-304 (1963)]. Fisher et al. [Pro. Soc. Exp. Biol. Med. 126:108-111 (1967)] report that the fiber fraction of oats is responsible for its unique effects on cholesterol. Over the years, numerous experiments with animals have shown that oat fiber has a hypocholesterolemic effect. Anderson et al. [Am. J. Clin. Nutri. 34:824-829 /(1981); 40:1146-1155 (1984)] have confirmed hypocholesterolemic effects of oats in humans. Oat fiber also reduces the amount of low-density lipoprotein (LDL) without lowering the beneficial high-density lipoprotein (HDL). In fact, Anderson et al. [66th Annual Meeting, Am. Assoc. Cer. Chem., Abstr. No. 112 (1981)] teach that oat bran fed to humans can reduce LDL 58% while increasing HDL 82%. Other water-soluble fibers, such as pectin and guar gum, can lower serum cholesterol, but they are frequently accompanied by undesirable side effects such as nausea and vomiting. The results of another study by Anderson et al. (supra, 1984) indicate that oat bran diets decrease total serum cholesterol 19% and LDL 23% and that oat bran increases bile acid excretion 65%. These studies clearly document the hypocholesterolemic effects in humans of oat products which are rich in soluble fiber.

Maltodextrins are successful commercial products prepared by hydrolysis of pure starch. The wet milling of corn is the primary source of starch from which maltodextrins are obtained. Other sources of starch for commercial products are tapioca, potato, and rice. Cereal flours are generally not used for maltodextrin production because of the flavors and colors that develop during processing [Katz, Cer. Foods World, 31:866-867 (1986)]. Also, when cereal flours are treated with amylases, a colloidal hydrolysate is obtained that is nonfilterable (U.S. Patent No. 4,894,242). However, some breakfast and related food products have been produced in which the characteristic cereal flavor is desired. Whole cereal flours have been subjected to starch-hydrolyzing conditions and have yielded, for example, a whole-grain hydrolyzed product [Conrad, U.S. Patent No. 4,377,602] and a ready-to-eat, enzyme-saccharified cereal [Fulger et al., U.S. Patent No. 4,710,286]. Ronai (U.S. Patent No. 3,640,729] arrives at a similar product by adding prehydrolyzed starch to oat flour to yield an instant oat cereal product.

### Summary of Invention

The invention described and claimed herein is based on the further discovery that barley substrates in addition to oat substrates can be used to prepare soluble dietary fiber composition. Barley substrates can be used in the same form and in the same amounts as the oat substrates. It has been further discovered that in the processing of either oat substrates or barley substrates it is advantageous to carry out the centrifugal separation of the soluble and insoluble components within the range from 5 to 50°C. Under these lower temperature conditions of separation, the amounts of lipids and proteins in the dietary fiber product are significantly reduced.

Other objects and advantages of this invention will become apparent from the ensuing description.

### Detailed Description of the Invention

Suitable substrates contemplated for use in the invention in addition to oat substrates include barley substrates which may be in the form of cereal flours and milled cereal brans. Of particular interest are the whole or debranned flours of barley and oats.

The substrate is slurried in a sufficient amount of water to give a concentration in the range of about 10-40% by weight. The water should contain a suitable calcium salt in an amount sufficient to stabilize the subsequently added α-amylase [preferably about 25-50 parts per million (ppm) of calcium]. The slurried substrate is gelatinized prior to enzymatic treatment, using any method known in the art. The pH of the gelatinized dispersion is adjusted to about 5.5-7.5, preferably about 6.0, with sodium hydroxide or phosphoric acid, and the α-amylase is then added.

It is advantageous to use thermostable α-amylases referred to as 1,4-α-D-glucan glucanohydrolases and having the essential enzymatic characteristics of those produced by the Bacillus stearothermophilus strains ATCC Nos. 31,195; 31,196; 31,197; 31,198, 31,199; and 31,783. These strains are described in U.S. Patent No. 4,284,722, which is herein incorporated by reference. Other sources of this enzyme include organisms such as B. subtilis which have been genetically modified to express the thermostable α-amylase of B. stearothermophilus as described in U.S. Patent No. 4,493,893, herein incorporated by reference. These enzymes are available commercially under the name "G-zyme G995" (formerly called "Enzeco Thermolase"; Enzyme Development Div., Biddle Sawyer Corp., New York, NY).

Other suitable α-amylases are those having the essential enzymatic characteristics of those produced by B. licheniformis var. as described in U.S. Patent No. 4,717,662 and 4,724,208, herein incorporated by reference. These enzymes are available commercially under the name "Taka-Therm L-340" (formerly called "Takalite" Solvay Enzyme Products, Inc., Elkhart, IN). Of course, any thermostable α-amylase which is useful in the thinning of the starch is contemplated for use herein.

The conditions of enzyme treatment, including the enzyme concentration and the time and temperature of reaction, are selected to achieve liquefaction of the starch in the substrate at a temperature of 60 to 100°C, preferably above 70°C, such as from 90 to 100°C. At these temperatures, gelatinization of the starch in the substrate can occur concurrently with the hydrolysis.

The duration of the treatment at the desired conversion temperature depends on the desired product properties and will generally range from about 2-60 min.

After completion of the enzymatic hydrolysis, the enzyme is inactivated, such as by passing the mixture through a steam injection pressure cooker at a temperature of about 140°C. Alternatively, the enzyme may be inactivated by acidification (pH 3.5-4.0) at 95°C for about 10 min. Optional neutralization with alkali increases the salt concentration of the product. After the enzyme has been inactivated, the soluble fraction comprising the soluble dietary fiber and the maltodextrins (maltooligosaccharides) is separated from the insoluble residue by centrifugation of the hydrolysates at a temperature within the range of 5 to 50°C. Under these conditions of separation, the levels of lipids and proteins in the dietary fiber products are significantly reduced. Water is then removed from the soluble fraction by any of a variety of conventional techniques, whereby the products of this invention comprising the dietary fiber and maltodextrins are recovered. The maltodextrins produced by the process of the invention have a D.E. of 20 or less. These maltodextrins are substantially water soluble at elevated temperatures (e.g., 60-100°C).

The soluble dietary fiber recovered from the centrifugate is principally in the form of β-glucans and pentosans. Of course the relative amount of each fiber type varies with the species of substrate. Oat and barley substrates yield mostly the β-glucans; whereas wheat, rice and corn yield the pentosans.

It was surprising to find that the maltodextrin products of this invention are readily obtainable from barley substrates as well as oat substrates in a colorless, white, and smooth-textured form, devoid of inherent undesirable color, flavor and grittiness associated with the starting materials. These products are remarkably adapted for use as functional and nutritional components of many foods comprising a digestible food component including dairy products, dairy product substitutes, high-soluble fiber bakery products, salad dressings, meats, frozen foods, yogurt, snacks, confectioneries, coatings, dietary-fiber beverages, breakfast foods, and various low-calorie/low-fat products. Consumer preference dictates that additives intended for these applications be characterized by the virtual absence of the flavor, color, and grittiness inherent to the starting substrate and to most dietary fibers currently marketed.

Characterization of the insoluble residue from the conversion mixture (supra) reveals a high proportion of protein. The protein is believed to complex with available lipid and to become insolubilized by heat denaturation. The residue also contains the insoluble fiber and the majority of the flavor and color components. This byproduct, therefore, has potential as an ingredient in foods or animal feeds and is considered an ancillary asset to the inventive process.

The following examples are presented only to further illustrate the invention and are not intended to limit the scope of the invention which is defined by the claims.

All percentages herein disclosed are by weight unless otherwise specified.

### Example

For each preparation 4000 g of whole barley flour, whole oat flour, or milled oat bran was slurried in 28-L of water containing 50 ppm of calcium (0.18 g/l CaCl₂·2H₂O) and gelatinized by passage through a steam injection cooker at 138°-143°C (30-40 psi of steam pressure). The gelatinized mixture was collected in a container, and the pH was adjusted to 6.0. "G-zyme G995" (supra) was added to the mixture at 95°C in an amount sufficient to provide 1 unit per gram of substrate. After 5 min of stirring at 95°C, the starch was liquefied, and the enzyme was inactivated by adjustment of the pH to 4.0 and heating at 95°-100°C for 10 min. The pH was then adjusted to 6.0. In one trial, the mixture was centrifuged at about 70°-90°C at 15,000 rpm using a "Sharples" centrifuge to separate the soluble and insoluble components.

In a second trial, the separation was conducted as in the first trial, except the mixture was first cooled to about 25°- 40°C prior to centrifuging at 15,000 rpm. The supernatant was freeze-dried (D.E. value less than 10). The supernatant was freeze-dried (D.E. value less than 10). The insoluble residue was removed and air-dried or roll dried. The results in Tables I and II show that centrifugation at the lower temperatures resulted in the maltodextrin-containing soluble fraction containing significantly lower levels of lipid and protein compared to the soluble fractions obtained from centrifugation at higher temperatures (above 70°C).

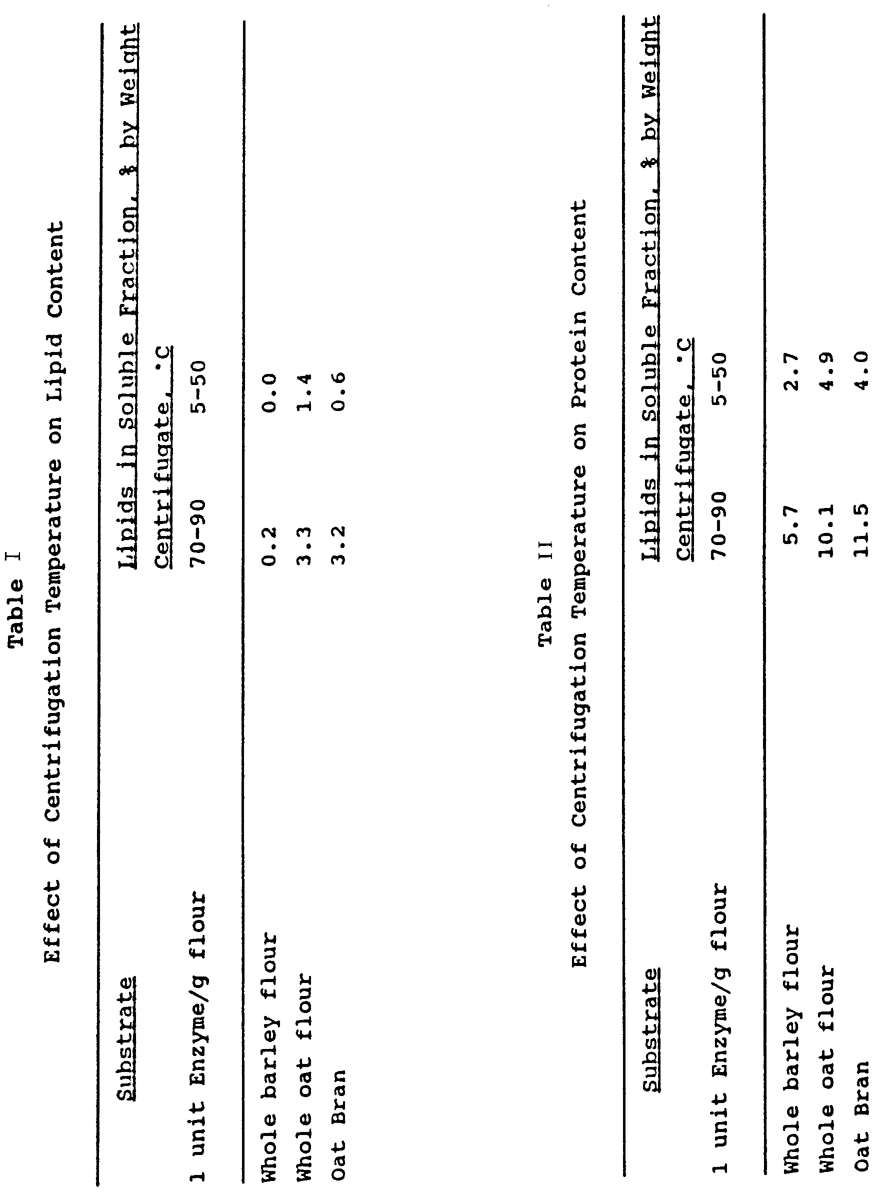

## Claims

1. A method for producing a water-soluble dietary fiber composition, comprising the steps of:
(a) treating an aqueous dispersion of a gelatinized, milled, oat or barley substrate with a thermostable α-amylase under conditions which will hydrolyze the substrate and yield a soluble fraction and an insoluble fraction, the hydrolysis being carried out at a temperature of 60 to 100°C with the conversion of starch to maltodextrins which have a D.E. of 20 or less;
(b) separating the soluble fraction from an insoluble fraction by centrifugal separation at a temperature within the range of 5 to 50°C; and
(c) recovering the separated soluble fraction to obtain a water-soluble dietary fiber composition of reduced lipid and protein content which is substantially free of water-insoluble fiber.

2. The method according to claim 1, wherein said centrifugal separation is carried out at a temperature from 25 to 40°C.

3. The method according to claims 1 or 2, wherein the solids content of said oat or barley aqueous dispersion is in the range of 10 to 40%.

4. The method according to claims 1, 2 or 3, wherein said substrate is an oat substrate.

5. The method according to claims 1, 2 or 3, wherein said substrate is a barley substrate.

6. The method according to any of claims 1 to 5, wherein the α-amylase is a thermostable α-amylase, the oat or barley substrate is gelatinized either before or concurrently with the hydrolysis, and the substrate is treated with the α-amylase at a temperature in the range of 90°C to 100°C.

## Patentansprüche

1. Verfahren zum Herstellen einer wasserlöslichen, diätetischen Faserzusammensetzung, umfassend die folgenden Schritte:
a) Behandeln einer wäßrigen Dispersion eines verkleisterten gemahlenen Hafer- oder Gerstensubstrats mit einer hitzebeständigen α-Amylase unter Bedingungen, die das Substrat hydrolysieren und die eine lösliche Fraktion und eine unlösliche Fraktion ergeben, wobei die Hydrolyse bei einer Temperatur von 60-100°C mit einer Umwandlung der Stärke zu Maltodextrinen, die einen DE-Wert von 20 oder weniger besitzen, ausgeführt wird;
b) Abtrennen der löslichen Fraktion von einer unlöslichen Fraktion durch Zentrifugaltrennung bei einer Temperatur innerhalb des Bereichs von 5 bis 50°C; und
c) Gewinnen der abgetrennten, löslichen Fraktion, um eine wasserlösliche, diätetische Faserzusammensetzung mit vermindertem Lipid- und Proteingehalt zu erhalten, die im wesentlichen frei von wasserunlöslichen Fasern ist.

2. Verfahren nach Anspruch 1, worin die besagte Zentrifugaltrennung bei einer Temperatur von 25 bis 40°C durchgeführt wird.

3. Verfahren nach Anspruch 1 oder 2, worin der Feststoffgehalt der besagten wäßrigen Hafer- oder Gerstendispersion im Bereich von 10 bis 40% liegt.

4. Verfahren nach Anspruch 1, 2 oder 3, worin das besagte Substrat ein Hafersubstrat ist.

5. Verfahren nach Anspruch 1, 2 oder 3, worin das besagte Substrat ein Gerstensubstrat ist.

6. Verfahren nach einem der Ansprüche 1 bis 5, worin die α-Amylase eine hitzebeständige α-Amylase ist, das Hafer- oder Gerstensubstrat entweder vor oder während der Hydrolyse verkleistert wird und das Substrat mit der α-Amylase bei einer Temperatur im Bereich von 90°C bis 100°C behandelt wird.

## Revendications

1. Procédé de préparation d'une composition de fibres diététique soluble dans l'eau, comprenant les étapes de :
(a) traitement d'une dispersion aqueuse d'un substrat d'avoine ou d'orge, gélatinisé, broyé, avec une amylase-α thermiquement stable dans des conditions qui hydrolysent le substrat et donnent une fraction soluble et une fraction insoluble, l'hydrolyse étant effectuée à une température de 60 à 100°C avec la transformation de l'amidon en malto-dextrines qui ont un équivalent en dextrose (DE) de 20 ou moins ;
(b) séparation de la fraction soluble d'une fraction insoluble par séparation centrifuge à une température dans la plage de 5 à 50°C ; et
(c) récupération de la fraction soluble séparée afin d'obtenir une composition de fibres diététique soluble dans l'eau à teneur réduite en lipides et en protéines, qui est substantiellement exempte de fibres insolubles dans l'eau.

2. Procédé selon la revendication 1, dans lequel ladite séparation centrifuge est effectuée à une température de 25 à 40°C.

3. Procédé selon les revendications 1 ou 2, dans lequel la teneur en matières solides de ladite dispersion aqueuse d'orge ou d'avoine est dans la plage de 10 à 40 %.

4. Procédé selon les revendications 1, 2 ou 3, dans lequel ledit substrat est un substrat d'avoine.

5. Procédé selon les revendications 1, 2 ou 3, dans lequel ledit substrat est un substrat d'orge.

6. Procédé selon l'une quelconque des revendications 1 à 5, dans lequel l'amylase-α est une amylase-α thermiquement stable, le substrat d'orge ou d'avoine est gélatisé soit avant, soit en même temps que l'hydrolyse et le substrat est traité avec l'amylase-α à une température dans la plage de 90 à 100°C.
